(19) Europäisches Patentamt
European Patent Office
Office européen des brevets

(11) Veröffentlichungsnummer: **0 157 001**
**B1**

# (12) EUROPÄISCHE PATENTSCHRIFT

(45) Veröffentlichungstag der Patentschrift: **18.01.89**

(51) Int. Cl.⁴: **B 23 H 3/10**

(21) Anmeldenummer: **84116119.3**

(22) Anmeldetag: **21.12.84**

## (54) Verfahren zum Behandeln von Natrium-Nitrat haltigen Elektrolyten beim elektrochemischen Bearbeiten metallischer Werkstücke.

(30) Priorität: **03.02.84 DE 3403703**

(43) Veröffentlichungstag der Anmeldung: **09.10.85 Patentblatt 85/41**

(45) Bekanntmachung des Hinweises auf die Patenterteilung: **18.01.89 Patentblatt 89/3**

(84) Benannte Vertragsstaaten: **DE FR GB IT SE**

(56) Entgegenhaltungen:
**FR-A- 2 309 274**

**CHEMICAL ABSTRACTS, vol. 99, no. 12, September 1983, page 492, abstract no. 95815a, Columbus, Ohio, US; & JP-A-58 08 915 (MITSUBISHI ELECTRIC CORP.) 18-02-1983**

(73) Patentinhaber: **AUDI AG, Postfach 220, D-8070 Ingolstadt (DE)**

(72) Erfinder: **Ufer, Peter Paul, Peisserstrasse 42, D-8070 Ingolstadt (DE)**
Erfinder: **Lindner, Horst Joachim, Silesiusstrasse 1, D-7080 Ingolstadt (DE)**
Erfinder: **Heck, Klaus, Dr., Krummenauerstrasse 4, D-8070 Ingolstadt (DE)**

(74) Vertreter: **Le Vrang, Klaus, AUDI AG Postfach 220 Patentabteilung I/EQP, D-8070 Ingolstadt (DE)**

**EP 0 157 001 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum Behandeln von Natrium-Nitrat ($NaNO_3$)-haltigen Elektrolyten beim elektrochemischen Bearbeiten metallischer Werkstücke.

Beim elektrochemischen Bearbeiten metallischer Werkstücke, z.B. beim elektrochemischen Konturbearbeiten, Entgraten, Aufweiten von Bohrungen, Honen von Zylinderlaufflächen bei Brennkraftmaschinen etc., werden in der Regel Natrium-Nitrat-Lösungen ($NaNO_3$) als Elektrolyt verwendet. Die bei der elektrochemischen Bearbeitung ablaufenden chemischen Reaktionen setzen dabei Ammoniumnitrat frei.

Dieses Ammoniumnitrat reichert sich in den beim Betrieb von elektrochemischen Bearbeitungsanlagen unvermeidlichen Salzverkrustungen an. Im Betrieb der Bearbeitungsanlage oder bei Reparaturen am Elektrolyt-Kreislauf kann es dann zu äusserst heftigen exothermen chemischen Reaktionen (Detonationen) kommen.

Um dieser Gefahr vorzubeugen, sind gewisse Sicherheitsanforderungen zu beachten; vornehmlich ist in festgesetzten Zeitintervallen der Elektrolyt zu erneuern. Das Wechseln des Elektrolyten ist jedoch mit erheblichem Arbeitsaufwand und somit mit erhöhten Kosten verbunden.

Aufgabe der Erfindung ist die Schaffung eines gattungsgemässen Verfahrens, mit dem mit relativ geringem Aufwand die Detonationsgefahr an elektrochemischen Bearbeitungsanlagen bei gleichzeitiger Verlängerung der Elektrolyt-Wechselintervalle eliminiert ist.

Diese Aufgabe wird erfindungsgemäss mit den kennzeichnenden Merkmalen des Patentanspruches 1 gelöst. Überraschend hat sich gezeigt, dass mittels eines in den Elektrolyt-Kreislauf eingeschalteten Ionenaustauschers das Ammoniumnitrat dem Elektrolyten wieder entzogen werden kann. Die hierbei ablaufende chemische Reaktion verläuft nach folgender chemischer Gleichung:

$$R\text{-}Na + NH_4NO_3 \rightleftarrows R\text{-}NH_4NaNO_3$$

Gemäss den Merkmalen des Patentanspruches 2 kann der Ionenaustauscher in Natriumform und für einen Einsatzbereich pH > 5 vorliegen, womit besonders günstige Ergebnisse erzielt werden konnten. Beispielsweise wurde ein schwachsaurer, makroskopischer Kationenaustauscher der Marke «Lewatit CNP 80» der Firma Bayer Leverkusen erfolgreich eingesetzt.

Der Ionenaustauscher kann unmittelbar in den Elektrolyt-Kreislauf integriert sein. Bevorzugt wird jedoch gemäss den Merkmalen des Patentanspruches 3 eine Anordnung, bei der der Ionenaustauscher in einen Bypass des Elektrolyt-Kreislaufes eingeschaltet ist. Dadurch kann der Elektrolyt-Kreislauf ungedrosselt aufrechterhalten und trotzdem eine ausreichende Reduktion des Ammoniumnitrates erzielt werden.

Durch die Merkmale des Patentanspruches 4 wird eine vorzeitige Verschmutzung und Zusetzung der vorzugsweise in Natriumform vorliegenden Schüttung des Ionenaustauschers vermieden.

Ein Ausführungsbeispiel der Erfindung ist im folgenden mit weiteren Einzelheiten anhand einer schematischen Zeichnung näher erläutert.

Das dargestellte Blockschaltbild zeigt den Elektrolyt-Kreislauf einer elektrochemischen Bearbeitungsanlage zum elektrochemischen Honen der Zylinderlaufflächen von Brennkraftmaschinen.

Der Elektrolyt $NaNO_3$ wird aus einem Reservoir 2 über eine Pumpe 4 zu einer Bearbeitungsstation 6 gefördert, in der in bekannter Weise die elektrochemische Bearbeitung der Zylinderlaufflächen erfolgt. Durch die bei der anodischen Werkstoffauflösung auftretenden chemischen Reaktionen wird der Elektrolyt mit Ammoniumnitrat ($NH_4NO_3$) angereichert.

Nach dem Durchlauf der Bearbeitungsstation 6 strömt der Elektrolyt in einen Zwischenbehälter 8 und von dort, gefördert über eine weitere Pumpe 10, in eine Klärstation 12, in der mittels eines Schrägklärers 14 und eines Schlammentwässerers 16 ein Grossteil des gelösten Werkstoffes bzw. des Metallschlammes separiert wird.

Der somit gereinigte Elektrolyt wird durch eine dritte Pumpe 18 zu einer Ozon-Behandlungsstation 20 geleitet, in der im Elektrolyten angelagertes Nitrit zu Nitrat oxidiert wird. Über eine weitere Pumpe 22 schliesslich wird der Elektrolyt wieder dem Reservoir 2 zugeführt.

In einem Bypass 24 des beschriebenen Elektrolyt-Kreislaufes stromab des Reservoirs 2, jedoch stromauf der Bearbeitungsstation 6, sind ein Feinfilter 26 und ein Ionenaustauscher 28 eingeschaltet.

In Bypass wird ständig ein vom Hauptstrom des Elektrolyt-Kreislaufes abgezweigter Anteil im Feinfilter 26 von mechanischen Verunreinigungen separiert und im Ionenaustauscher 28, einem schwachsauren, makroskopischen Kationenaustauscher in Natriumform (Lewatit CNP 80 der Firma Bayer) für einen Einsatzbereich pH > 5, das Ammoniumnitrat nach der nachstehenden Gleichung entzogen.

$$R\text{-}Na + NH_4NO_3 \rightleftarrows R\text{-}NH_4NaNO_3$$

## Patentansprüche

1. Verfahren zum Behandeln von Natrium-Nitrat-haltigen Elektrolyten beim elektrochemischen Bearbeiten metallischer Werkstücke, dadurch gekennzeichnet, dass dem Elektrolyten mittels eines Ionenaustauschers (28) das bei der Bearbeitung sich bildende Ammoniumnitrat entzogen wird.

2. Verfahren nach Anspruch 1, dadurch gekennzeichnet, dass der Ionenaustauscher (28) in Natriumform für einen Einsatzbereich pH > 5 vorliegt.

3. Verfahren nach den Ansprüchen 1 und 2, dadurch gekennzeichnet, dass der Ionenaustau-

scher (28) in einen Bypass (24) des Elektrolyt-Kreislaufes eingeschaltet ist.

4. Verfahren nach den Ansprüchen 1 bis 3, dadurch gekennzeichnet, dass dem Ionenaustauscher (28) ein Feinfilter (26) vorgeschaltet ist.

**Claims**

1. Process for treating electrolytes, containing sodium nitrate, in the electrochemical treatment of metallic workpieces, characterized in that the ammonium nitrate forming in the treatment is removed from the electrolyte by means of an ion exchanger (28).

2. Process according to Claim 1, characterized in that the ion exchanger (28) is in the sodium form for an application range of pH > 5.

3. Process according to Claims 1 and 2, characterized in that the ion exchanger (28) is inserted into a by-pass (24) of the electrolyte circulation.

4. Process according to Claims 1 to 3, characterized in that a fine filter (26) is provided upstream of the ion exchanger (28).

**Revendications**

1. Procédé pour le traitement d'électrolytes contenant du nitrate de sodium, utilisés dans l'usinage électrochimique de pièces métalliques, caractérisé en ce que le nitrate d'ammonium qui se forme au cours de l'usinage est extrait de l'électrolyte au moyen d'un échangeur d'ions (28).

2. Procédé selon la revendication 1, caractérisé en ce que l'échangeur d'ions se présente sous forme sodique pour une plage d'action de pH > 5.

3. Procédé selon la revendication 1 ou 2, caractérisé en ce que l'échangeur d'ions (28) est introduit dans une dérivation (24) du circuit de l'électrolyte.

4. Procédé selon l'une quelconque des revendications 1 à 3, caractérisé en ce qu'un filtre fin (26) est disposé en amont de l'échangeur d'ions (28).

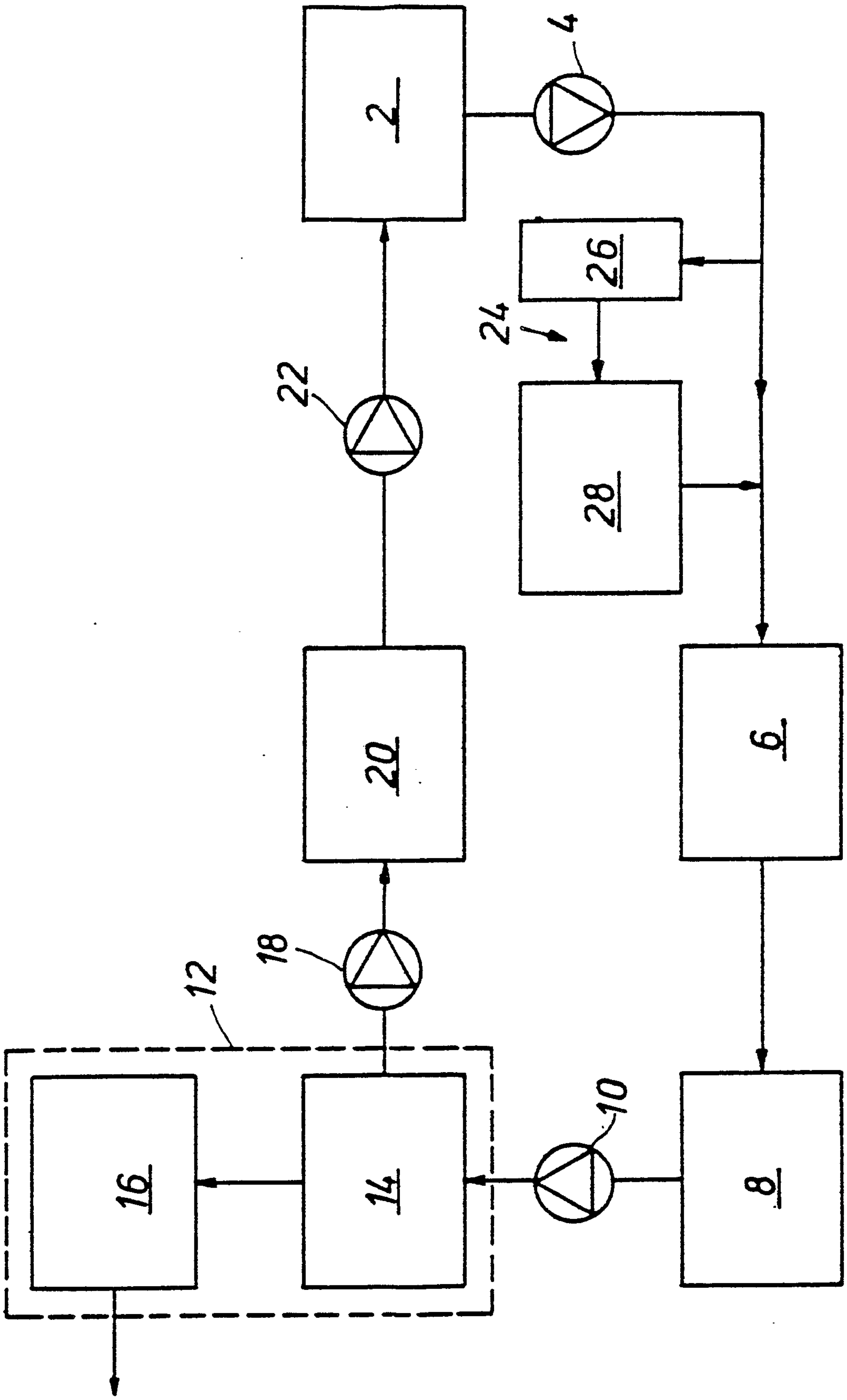
2
4
26
24
22
28
20
6
18
12
10
14
16
8